# EUROPEAN PATENT SPECIFICATION

(11) **EP 4 510 363 B1**
(45) Date of publication and mention of the grant of the patent: **06.05.2026**
(21) Application number: 23884462.5
(22) Date of filing: 08.09.2023
(51) Int. Cl.: H01M 50/176, H01M 50/531, H01M 50/533, H01M 50/55, H01M 50/553

(54) **BATTERY**
BATTERIE
BATTERIE

(30) Priority: 31.10.2022 CN 202222892894 U
(43) Date of publication of application: 19.02.2025
(73) Proprietor: Zhuhai CosMX Battery Co., Ltd., Zhuhai, Guangdong 519180 (CN)
(72) Inventor: WEI, Zhida, Zhuhai, Guangdong 519180 (CN); XIE, Jichun, Zhuhai, Guangdong 519180 (CN); LI, Xilong, Zhuhai, Guangdong 519180 (CN)
(74) Representative: Elzaburu S.L.P.
(86) International application number: PCT/CN2023/117837
(87) International publication number: WO 2024/093529

(56) References cited:
- WO-A1-2017/194411
- WO-A1-2022/082963
- CN-A- 111 081 912
- CN-A- 112 290 167
- CN-U- 206 210 861
- CN-U- 212 257 538
- CN-U- 217 114 699
- CN-U- 218 513 648

## Description

This application claims priority to Chinese patent application No. 202222892894.2, entitled "Battery", and filed with the China National Intellectual Property Administration on October 31, 2022

### TECHNICAL FIELD

This application relates to the technical field of batteries, and in particular to a battery.

### BACKGROUND

With the progress of economic globalization and the extensive use of fossil fuels, the problems of environmental pollution and energy shortage have received increasing attention. Searching a new energy-storage device has become a research hot-topic in the new energy-related field. Batteries have rapidly developed into a new generation of the energy storage device depending on their advantages of high energy density, low self-discharge, good cycle performance, no memory effect and the like. They are used as power support in information technology, electric vehicle, aerospace and other fields.

A battery may include a shell, a cell and a post assembly. The cell is located inside the shell. A tab can be extended from one end of the cell. Generally, the tab and the post assembly are connected via a connecting sheet. In the prior art, the tab is connected to a connecting sheet. The post assembly is connected to the other connecting sheet. The two connecting sheets can be connected by a welding process to achieve the connection between the tab and the post assembly. The two connecting sheets are located between the tab and the shell.

However, in order to ensure the energy density of the battery, a space between the tab and the shell is usually set smaller, so that a welding space configured between the two connecting sheets is smaller, which easily leads to inconvenience in welding and affects the assembly efficiency of the battery.

WO2017194411A1 discloses an electrochemical cell having a prismatic cell housing and an electrode assembly disposed in the cell housing. The cell housing is six-sided and includes a first end, a second end, and a sidewall that extends between the first and second ends. The sidewall includes a pair of major sides joined by a pair of minor sides, where each side of the pair of major sides is larger in area than each side of the pair of minor sides. The electrode assembly includes positive electrode plates alternating with negative electrode plates and separated by at least one separator to form an electrode stack. The electrode stack is oriented within the cell housing such that a stack axis that extends parallel to a stacking direction of the positive and negative electrode plates is normal to, and passes through, each side of the pair of minor sides.

CN112290167A relates to the field of batteries, in particular to a single battery, a manufacturing method of the single battery, a battery and an electric device. Specifically, the single battery includes: a shell, which is equipped with a first opening; an end cover, which is used for sealing the first opening, and is provided with an electrode terminal; an electrode assembly, which is accommodated in the shell, is provided with a tab facing the first opening; a switching assembly, which is located between the end cover and the electrode assembly and used for electrically connecting the electrode terminal and the tab, and comprises a first switching piece and a second switching piece; wherein the first switching piece is fixed with the electrode terminal, the second switching piece is fixed with the tab, and the first switching piece is configured to be rotationally clamped with the second switching piece, so that the electrode terminal is electrically connected with the tab.

### SUMMARY

This application provides a battery, which can solve the problem that the relatively complicated welding process affects the assembling efficiency of the battery since a connecting sheet on the tab and a connecting sheet on the post assembly are connected via the welding process.

The invention is set out in the appended set of claims.

This application provides a battery, including:
a cell including a tab;
a post assembly connected to the tab;
a connecting sheet assembly connecting the tab and the post assembly, where the connecting sheet assembly includes a first connecting sheet and a second connecting sheet; one of the first connecting sheet and the second connecting sheet is connected to the tab, and the other of the first connecting sheet and the second connecting sheet is connected to the post assembly; the first connecting sheet is snapped with the second connecting sheet.

The first connecting sheet can be connected to the tab in the battery provided in this application. The second connecting sheet can be connected to the post assembly. The first connecting sheet and the second connecting sheet can be connected by a snap-fit manner in an embodiment of this application. The connection between the first connecting sheet and the second connecting sheet can be achieved manually or through a simple operating tool by a worker, thereby reducing a possibility that assembling efficiency of the battery is reduced as a result of the complicated welding process between the first connecting sheet and the second connecting sheet.

In addition, if the first connecting sheet and the second connecting sheet are connected by a welding process, welding slag is easily generated during the welding process of the first connecting sheet and the second connecting sheet. A short circuit in the cell is easily caused by the welding slag falling into interior of the battery, thereby affecting a service performance of the battery. Manpower is consumed in the case of cleaning the welding slag after all welding processes are completed, thereby affecting the assembling efficiency of the battery. The first connecting sheet and the second connecting sheet are connected in the snap-fit manner in this application, effectively solving the above problem.

The first connecting sheet includes a connecting portion and a plug-in portion, where the connecting portion is connected to the tab, and the plug-in portion is plugged into the second connecting sheet.

According to this application, the second connecting sheet includes a first plate body and a second plate body, where the first plate body is connected to the post assembly, the first plate body and the second plate body are connected to form a slot with an opening, and the plug-in portion is plugged into the slot through the opening.

According to one embodiment of this application, the second connecting sheet includes an elastic sheet, which is disposed in the second plate body, protrudes from a surface of the second plate body facing the first plate body, and abuts against the plug-in portion.

According to one embodiment of this application, the opening of the slot is disposed along a thickness direction of the cell, and the plug-in portion is plugged into the slot along the thickness direction; and the elastic sheet includes a fixed end, an abutment portion and a movable end along the thickness direction, the fixed end is connected to the second plate body, the movable end is slidably connected to the second plate body, and the abutment portion abuts against the plug-in portion.

According to one embodiment of this application, the first connecting sheet is a strip-shaped plate, and a plurality of elastic sheets are present, and the plurality of elastic sheets are disposed along a length direction of the first connecting sheet.

According to one embodiment of this application, the first connecting sheet includes at least one snap-fit protrusion, which is disposed on a surface of the plug-in portion facing the cell; the second connecting sheet includes a snap-fit hole, which is disposed in the second plate body; the snap-fit hole is disposed corresponding to the snap-fit protrusion, and the snap-fit hole is disposed between two adjacent elastic sheets.

According to one embodiment of this application, the second plate body is provided with an avoidance hole, the elastic sheet is provided corresponding to the avoidance hole, and the snap-fit hole is provided between two adjacent avoidance holes.

According to one embodiment of this application, along a length direction of the cell, a plurality of elastic sheets are correspondingly disposed in one of a plurality of avoidance holes close to an edge area of the second plate body; and along a thickness direction of the cell, the movable end of part of the elastic sheets is close to the opening and the movable end of remaining part of the elastic sheets is far away from the opening.

According to one embodiment of this application, the elastic sheet further includes a first elastic sheet and a second elastic sheet; along the thickness direction, one end of the abutment portion is connected to the first elastic sheet and the other end of the abutment portion is connected to the second elastic sheet; the second connecting sheet further includes a sliding guide portion, which is connected to the second plate body; one of the first elastic sheet and the second elastic sheet forms the movable end at one end away from the abutment portion, and the other of the first elastic sheet and the second elastic sheet forms the fixed end at one end away from the abutment portion; the movable end is slidably connected to the sliding guide portion.

According to one embodiment of this application, the abutment portion of the elastic sheet has a largest distance protruding from the second plate body.

According to one embodiment of this application, when the elastic sheet is in a free state, a distance between the abutment portion and the first plate body is less than or equal to half of a thickness of the first connecting sheet.

### BRIEF DESCRIPTION OF DRAWINGS

The accompanying drawings herein, which are incorporated in this specification and constitute a part of this specification, illustrate embodiments consistent with this application and serve to explain the principle of this application together with the specification.
FIG. 1 is a structurally schematic diagram showing a battery according to an embodiment of this application.
FIG. 2 is a schematic diagram showing an exploded structure of a battery according to an embodiment of this application.
FIG. 3 is an enlarged schematic diagram at position A in FIG. 2.
FIG. 4 is a schematic diagram showing an exploded structure of a connecting sheet assembly according to an embodiment of this application.
FIG. 5 is a schematic diagram showing a cross-sectional structure along the B-B direction in FIG. 1.
FIG. 6 is an enlarged schematic diagram at position C in FIG. 5.
FIG. 7 is a structurally schematic diagram showing a second connecting sheet according to an embodiment of this application.

### Description of reference signs:

10: Battery;
100: Cell; 110: Tab;
200: Post assembly;
210: Post; 220: Outer insulating sheet; 230: Inner insulating sheet;
300: Connecting sheet assembly;
310: First connecting sheet;
311: Connecting portion; 312: Plug-in portion; 313: Snap-in protrusion;
320: Second connecting sheet; 320a: Slot; 320b: Opening; 320c: Snap-in hole;
321: First plate body; 3211: Riveting portion;
322: Second plate body; 322a: Avoidance hole;
323: Elastic sheet; 323a: Fixed end; 323b: Movable end;
3231: Abutment portion; 3232: First elastic sheet; 3233: Second elastic sheet;
324: Sliding guide portion;
400: Shell; 410: Shell body; 420: Cover body;
500: Reinforcement sheet;
600: Sealing sheet;
X: Thickness direction of the cell; Y: Width direction of the cell; Z: Length direction of the cell.

Specific embodiments of this application have been illustrated based on the above accompanying drawings and will be described in more detail hereinafter. These accompanying drawings and textual specification are not intended to limit the scope of the concept of this application in any way, but rather to illustrate the concept of this application to those skilled in the art by referring to the specific embodiments.

### DESCRIPTION OF EMBODIMENTS

Exemplary embodiments will be illustrated in detail herein, examples of which are shown in the accompanying drawings. Unless otherwise indicated, when the following description refers to the accompanying drawings, the same signs in different drawings represent the same or similar elements. The implementations described in the following exemplary embodiments do not represent all implementations consistent with this application. Rather, they are merely examples of the device and methods consistent with some aspects of this application as recited in the appended claims.

The battery 10 in the embodiment of this application may include a lithium-ion battery, a lithium-sulfur battery, or a sodium-lithium-ion battery, etc., which is not limited in this application. Generally, the battery 10 can be divided into a square battery and a soft package battery according to the packaging method, which is not limited in this application.

The device in the embodiment of this application can be a mobile device such as a vehicle, a ship, a small aircraft, etc. Taking the vehicle as an example, the vehicle of this application may be a new energy vehicle. The new energy vehicle may be a pure electric vehicle, a hybrid electric vehicle or an extended-range vehicle.

The battery 10 can be used as a driving power source for the vehicle, replacing or partially replacing fuel oil or natural gas to provide driving power for the vehicle. Exemplarily, the battery 10 can provide electrical energy for a driving motor. The driving motor is connected to wheels of the vehicle through a transmission mechanism to drive the vehicle to advance. Specifically, the battery 10 may be horizontally disposed at the bottom of the vehicle.

A battery 10 may include a shell 400, a cell 100, and a post assembly 200. The cell 100 is located inside the shell 400. The cell 100 may be formed by a winding process or a lamination process, which is not limited in this application.

A tab 110 may be extended from one end of the cell 100. Generally, the tab 110 and the post assembly 200 are connected via a connecting sheet. In the prior art, the tab 110 is provided with one connecting sheet. The post assembly 200 is connected to the other connecting sheet. The two connecting sheets are both located between the tab 110 and the shell 400. The two connecting sheets can be connected by welding to connect the tab 110 and the post assembly 200.

However, in order to ensure the energy density of the battery 10, the space between the tab 110 and the shell 400 is small, making it difficult to provide sufficient welding space for the two connecting sheets, which results in a more complicated welding process for the two connecting sheets and affects the assembling efficiency of the battery 10.

Based on the above problems, the applicant has improved the structure of the battery 10. The embodiments of this application are further described hereinafter.

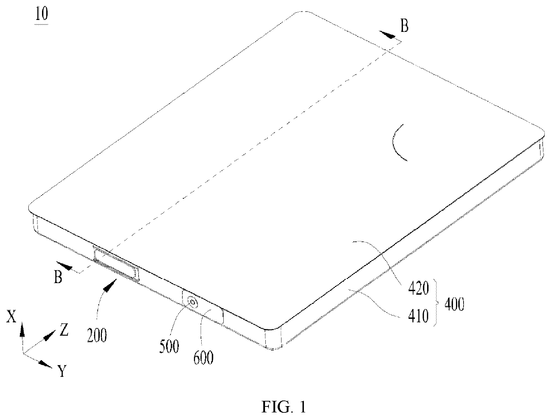

Referring FIGs. 1-3, a battery 10 according to an embodiment of this application includes a cell 100, a post assembly 200, and a connecting sheet assembly 300. The cell 100 includes a tab 110. The post assembly 200 is connected to the tab 110.

The connecting sheet assembly 300 is configured to connect the tab 110 and the post assembly 200. The connecting sheet assembly 300 includes a first connecting sheet 310 and a second connecting sheet 320. One of the first connecting sheet 310 and the second connecting sheet 320 is connected to the tab 110, and the other of the first connecting sheet 310 and the second connecting sheet 320 is connected to the post assembly 200. The first connecting sheet 310 is snapped with the second connecting sheet 320.

In this application, the first connecting sheet 310 may be connected to the tab 110, and the second connecting sheet 320 may be connected to the post assembly 200. The first connecting sheet 310 and the second connecting sheet 320 can be connected by a snap-fit manner in the embodiment of this application. The connection between the first connecting sheet 310 and the second connecting sheet 320 can be achieved manually or through a simple operating tool by a worker, thereby reducing a possibility that the assembling efficiency of the battery 10 is reduced as a result of the complicated welding process between the first connecting sheet 310 and the second connecting sheet 320.

In addition, if the first connecting sheet 310 and the second connecting sheet 320 are connected by a welding process, welding slag is easily generated during the welding process of the first connecting sheet 310 and the second connecting sheet 320. A short circuit in the cell 100 is easily caused since the welding slag falls into interior of the battery 10 and easily scratches the cell 100, thereby affecting a service performance of the battery 10. Manpower is consumed in the case of cleaning the welding slag after all welding processes are completed, thereby affecting the assembling efficiency of the battery 10. The first connecting sheet 310 and the second connecting sheet 320 are connected in the snap-fit manner in this application, effectively solving the above problem.

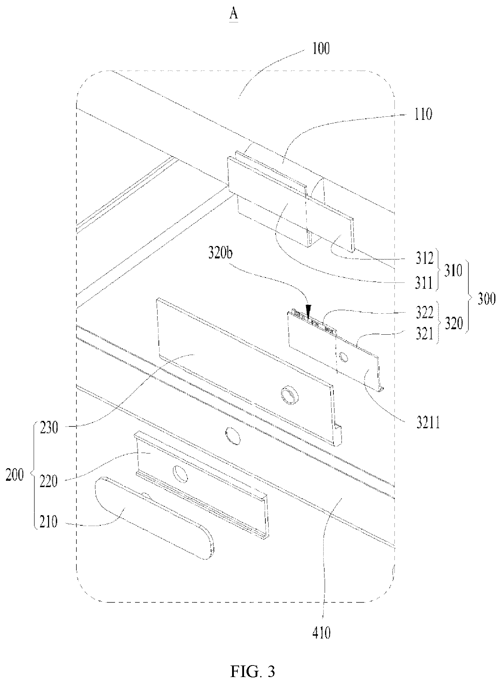

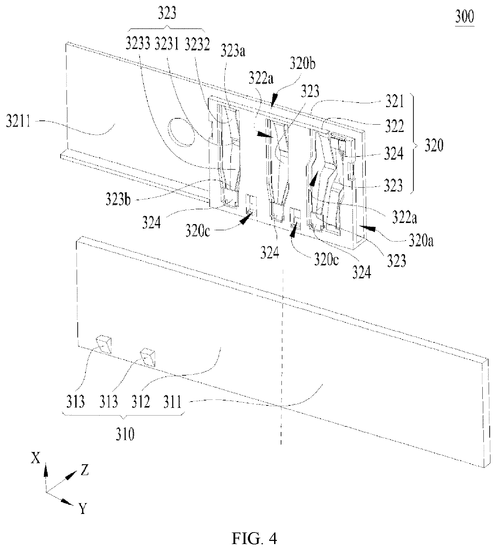

In some possible implementations, referring to FIG. 3 and FIG. 4, the first connecting sheet 310 includes a connecting portion 311 and a plug-in portion 312 in the embodiment of this application. The connecting portion 311 is connected to the tab 110. The second connecting sheet 320 includes a first plate body 321 and a second plate body 322. The first plate body 321 is connected to the post assembly 200. The first plate body 321 and the second plate body 322 are connected to form a slot 320a having an opening 320b. The plug-in portion 312 is plugged into the slot 320a through the opening 320b.

The first connecting sheet 310 can be plugged into the slot 320a through the opening 320b in this application. The first connecting sheet 310 may be connected to an inner wall of the slot 320a to achieve the connection between the first connecting sheet 310 and the second connecting sheet 320.

In some examples, the connecting portion 311 and the plug-in portion 312 may be disposed side by side along a width direction Y of the cell 100. The connecting portion 311 and the plug-in portion 312 are connected to form the first connecting sheet 310 with a flat structure. The first connecting sheet 310 is located on a side of the tab 110 facing away from the cell 100. Along the width direction Y, the plug-in portion 312 extends beyond one side of the tab 110, and the plug-in portion 312 corresponds to the second plate body 322, thereby reducing the possibility of the assembling of the battery 10 affected by the tab 110 colliding with the first plate body 321 or the second plate body 322 during the process of plugging the plug-in portion 312 into the slot 320a.

In some examples, the connecting portion 311 and the tab 110 may be connected by the welding process.

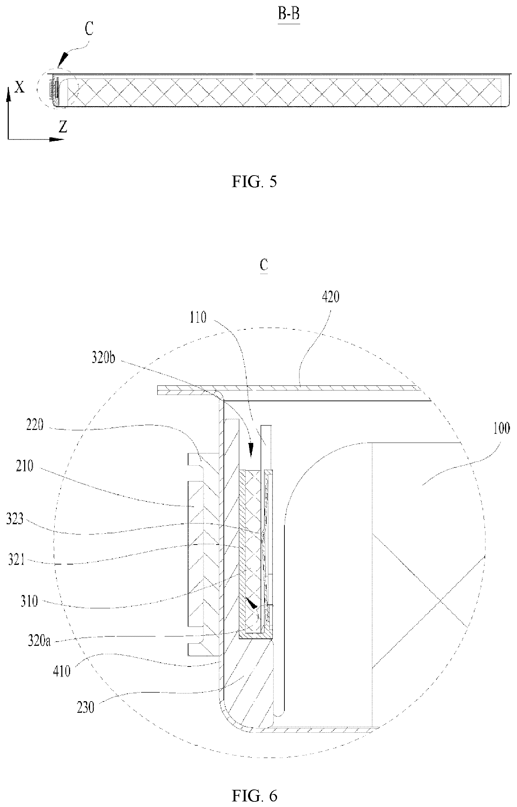

In some possible implementations, referring to FIGs. 4-6, the second connecting sheet 320 includes an elastic sheet 323 in the embodiment of this application. The elastic sheet 323 is disposed in the second plate body 322. The elastic sheet 323 protrudes from a surface of the second plate body 322 facing the first plate body 321. The elastic sheet 323 abuts against the plug-in portion 312.

In this application, the elastic sheet 323 can press the plug-in portion 312 against a surface of the first plate body 321 facing the second plate body 322, so that the plug-in portion 312 can fit tightly with the first plate body 321, and it is difficult for the plug-in portion 312 to move out of the slot 320a, which is beneficial to improving the connection reliability between the first connecting sheet 310 and the second connecting sheet 320, and reducing the possibility that the plug-in portion 312 moving out of the slot 320a results in unstable connection between the first connecting sheet 310 and the second connecting sheet 320, thereby affecting the conductivity of the battery 10.

In some examples, the first connecting sheet 310 and the second connecting sheet 320 may be located between the tab 110 and the post assembly 200 along a length direction Z of the cell 100. The second plate body 322 may be located on a side of the first plate body 321 facing the cell 100. A side of the first plate body 321 facing away from the cell 100 can be configured to connect with the post assembly 200.

In some examples, the first plate body 321 may be a flat plate structure. The post assembly 200 can be connected to the first plate body 321 using a riveting process. Exemplarily, the first plate body 321 may include a riveting portion 3211 for riveting to the post assembly 200. An orthographic projection of the riveting portion 3211 may have no overlapping area with an orthographic projection of the connecting portion 311 along the length direction Z of the cell 100. That is, along the length direction Z of the cell 100, an orthographic projection of the connecting portion 311 on a side surface of the second connecting sheet 320 facing the first connecting sheet 310 is misaligned with the riveting portion 3211. The riveting portion 3211 may be provided with a riveting hole.

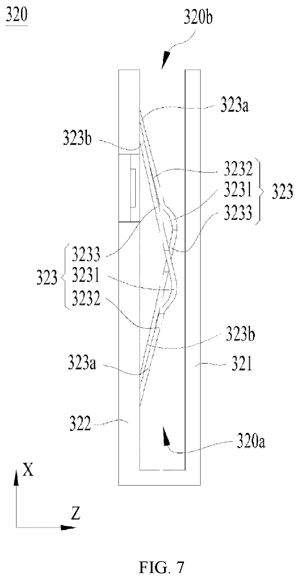

In some possible implementations, referring to FIG. 4 and FIG. 7, the opening 320b of the slot 320a is disposed along a thickness direction X of the cell 100 in the embodiment of this application. The plug-in portion 312 is plugged into the slot 320a along the thickness direction X. The elastic sheet 323 includes a fixed end 323a, an abutment portion 3231 and a movable end 323b along the thickness direction X. The fixed end 323a is connected to the second plate body 322. The movable end 323b can be slidably connected to the second plate body 322. The abutment portion 3231 abuts against the plug-in portion 312.

In this application, during plugging the plug-in portion 312 into the slot 320a through the opening 320b, the elastic sheet 323 may be subjected to a force exerted on it by the plug-in portion 312. At this moment, the movable end 323b can slide along a movement direction of the plug-in portion 312, so that the abutment portion 3231 can slide along the movement direction of the plug-in portion 312 and meanwhile approach a direction where the second plate body 322 is located, therefore the plug-in portion 312 can enter a gap between the abutment portion 3231 and the first plate body 321. The plug-in portion 312 can be tightly fit with the first plate body 321 by the abutment portion 3231, thereby improving the connection reliability between the first connecting sheet 310 and the second connecting sheet 320, and further facilitating improving the connection reliability between the post assembly 200 and the tab 110.

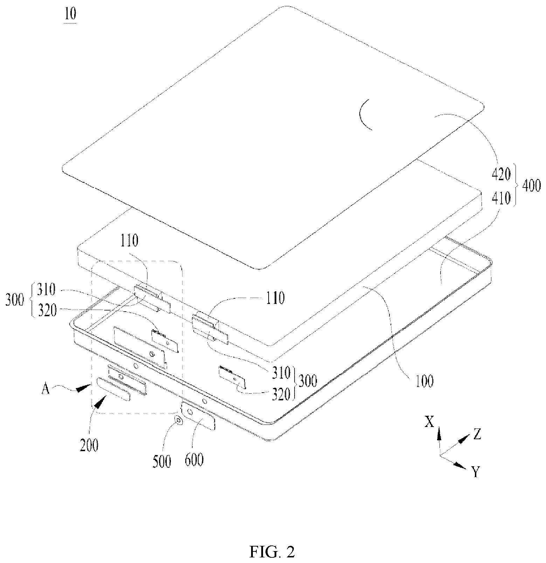

In some examples, as shown in FIG. 2, the battery 10 may include a shell 400. The shell 400 may include a shell body 410 and a cover body 420. The shell body 410 has an opening along the thickness direction X of the cell 100. A direction of the opening of the shell body 410 may be the same as the direction of the opening 320b of the slot 320a. The assembling of the battery 10 may include the following steps. Firstly, the post assembly 200 may be connected to the shell body 410 and the second connecting sheet 320. Secondly, the tab 110 is connected to the first connecting sheet 310, such that the cell 100, the tab 110 and the first connecting sheet 310 are connected together to be a whole. Then, the cell 100 is placed inside the shell body 410 through the opening, and the plug-in portion 312 of the first connecting sheet 310 is plugged into the slot 320a. Finally, the cover body 420 is sealed and connected to the shell body 410.

In some examples, the direction of the opening of the slot 320a may be upward along the thickness direction X. The plug-in portion 312 can be plugged downward into the slot 320a from an upper end of the opening 320b. In the course that the plug-in portion 312 is plugged into the slot 320a, the movable end 323b of the elastic sheet 323 may slide downward.

In some possible implementations, referring to FIG. 4, the first connecting sheet 310 is a strip-shaped plate in the embodiment of this application. There are a plurality of elastic sheets 323. The plurality of elastic sheets 323 are disposed along a length direction Z' of the first connecting sheet 310.

In this application, there are multiple elastic sheets 323, in order to increase the contact area between the elastic sheets 323 and the plug-in portion 312, so that the first connecting sheet 310 and the second connecting sheet 320 can be connected more tightly, reducing the possibility that the plug-in portion 312 moves out of the slot 320a, resulting in poor contact between the first connecting sheet 310 and the second connecting sheet 320, thereby affecting the service performance of the battery 10.

In some examples, the length direction Z of the first connecting sheet 310 may be the same as the width direction Y of the cell 100.

In some possible implementations, referring to FIG. 4, the first connecting sheet 310 includes at least one snap-fit protrusion 313 in the embodiment of this application. The snap-fit protrusion 313 is protrudingly disposed on a surface of the plug-in portion 312 facing the cell 100. The second connecting sheet 320 includes a snap-fit hole 320c. The snap-fit hole 320c is disposed in the second plate body 322. The snap-fit hole 320c is disposed corresponding to the snap-fit protrusion 313. The snap-fit hole 320c is disposed between two adjacent elastic sheets 323.

The plug-in portion 312 can be plugged downward into the slot 320a through the opening 320b. When the snap-fit protrusion 313 moves downward to the inside of the snap-fit hole 320c, the snap-fit hole 320c can constrain the snap-fit protrusion 313 from moving along the width direction Y and the thickness direction X, and the elastic sheet 323 can abut against the plug-in portion 312 to constrain the plug-in portion 312 from moving along the length direction Z, so that the snap-fit protrusion 313 will be not prone to moving out of the snap-fit hole 320c, which is beneficial to improving the connection stability between the plug-in portion 312 and the first plate body 321, and reducing the possibility of unstable connection between the post assembly 200 and the tab 110 due to relative movement between the plug-in portion 312 and the first plate body 321, affecting the service performance of the battery 10.

In some examples, the number of the snap-fit protrusions 313 may be the same as the number of the snap-fit holes 320c. When there are multiple snap-fit protrusions 313 and snap-fit holes 320c, the snap-fit holes 320c may be evenly disposed in the second plate body 322 along the width direction Y.

In some possible implementations, as shown in FIG. 4, the second plate body 322 is provided with an avoidance hole 322a. The avoidance hole 322a is disposed corresponding to the elastic sheet 323. The snap-fit hole 320c is disposed between two adjacent avoidance holes 322a.

In some examples, the avoidance holes 322a and the snap-fit holes 320c may be disposed alternately, that is, a snap-fit hole 320c may be disposed between two adjacent avoidance holes 322a. An avoidance hole 322a may also be provided between two adjacent snap-fit holes 320c.

In some examples, the elastic sheet 323 having the fixed end 323a, the abutment portion 3231, and the movable end 323b can be formed using a stamping process, so that the elastic sheet 323 and the second plate body 322 may be an integral structure. The avoidance hole 322a can be used to avoid the punch.

Exemplarily, there may be two snap-fit holes 320c and two snap-fit protrusions 313. There may be three avoidance holes 322a. One snap-fit hole 320c is provided between the two avoidance holes 322a along the width direction Y.

In some possible implementations, as shown in FIG. 4, a plurality of elastic sheets 323 are correspondingly disposed in one of the plurality of avoidance holes 322a close to an edge area of the second plate body 322 along the length direction Z' of the first connecting sheet 310, and the movable end 323b of one part of the elastic sheets 323 is close to the opening 320b while the movable end 323b of the other part of the elastic sheets 323 is far away from the opening 320b along the thickness direction X of the cell 100.

In some examples, a height of the abutment portion 3231 of the elastic sheet 323 whose movable end 323b is close to the opening 320b may be different from a height of the abutment portion 3231 of the elastic sheet 323 whose movable end 323b is far from the opening 320b along the thickness direction X. Therefore, along the thickness direction X, the abutment portions 3231 of the plurality of elastic sheets 323 in one avoidance hole 322a may abut against different positions of the plug-in portion 312, thereby facilitating improving the connection stability between the plug-in portion 312 and the first plate body 321.

In some examples, as shown in FIG. 4, two elastic sheets 323 may be disposed in one avoidance hole 322a. The movable end 323b of one of the two elastic sheets 323 may be close to the opening 320b, and the movable end 323b of the other elastic sheet 323 may be far away from the opening 320b.

In some other examples, as shown in FIG. 4, three elastic sheets 323 may be disposed in one avoidance hole 322a. The movable end 323b of at least one of the three elastic sheets 323 may be close to the opening 320b, and the movable end 323b of at least one of the elastic sheets 323 may be far away from the opening 320b.

In some possible implementations, referring to FIG. 4 and FIG. 7, the elastic sheet 323 further includes a first elastic sheet 3232 and a second elastic sheet 3233. One end of the abutment portion 3231 is connected to the first elastic sheet 3232 and the other end of the abutment portion 3231 is connected to the second elastic sheet 3233 along the thickness direction X. The second connecting sheet 320 further includes a sliding guide portion 324. The sliding guide portion 324 is connected to the second plate body 322. One end of one of the first elastic sheet 3232 and the second elastic sheet 3233 away from the abutment portion 3231 forms the movable end 323b, and one end of the other of the first elastic sheet 3232 and the second elastic sheet 3233 away from the abutment portion 3231 forms the fixed end 323a. The movable end 323b is slidably connected to the sliding guide portion 324.

In some examples, the direction in which the plug-in portion 312 moves into the slot 320a through the opening 320b may be the same as the direction in which the movable end 323b slides along the sliding guide portion 324.

In this application, in the course that the plug-in portion 312 enters the slot 320a through the opening 320b, the plug-in portion 312 can push the first elastic sheet 3232 or the second elastic sheet 3233 to move after the elastic sheet 323 is subjected to the force exerted by the plug-in portion 312. At this moment, the movable end 323b can slide along the sliding guide portion 324 along the movement direction of the plug-in portion 312, and the abutment portion 3231 can slide along the movement direction of the plug-in portion 312 and meantime it can also approach the direction in which the second plate body 322 is located, so that the plug-in portion 312 can enter the gap between the abutment portion 3231 and the first plate body 321. When the snap-fit protrusion 313 on the plug-in portion 312 moves to the snap-fit hole 320c in the second plate body 322, the plug-in portion 312 and the second plate body 322 are fitted to each other tightly. The first plate body 321 is stationary relative to the second plate body 322, thereby improving the connection reliability between the first connecting sheet 310 and the second connecting sheet 320, and facilitating improving the connection stability between the post assembly 200 and the tab 110.

As shown in FIG. 4, one end of the first elastic sheet 3232 away from the abutment portion 3231 forms the fixed end 323a, and one end of the second elastic sheet 3233 away from the abutment portion 3231 forms the movable end 323b. The movable end 323b is slidably connected to the sliding guide portion 324.

In some possible implementations, as shown in FIG. 7, the abutment portion 3231 of the elastic sheet 323 has a largest distance protruding from the second plate body 322. When the elastic sheet 323 is in a free state, a distance between the abutment portion 3231 and the first plate body 321 is less than or equal to half of a thickness of the first connecting sheet.

The plug-in portion 312 can be abutted against the surface of the first plate body 321 facing the second plate body 322 by the abutment portion 3231 in this application. Interaction force is present between the abutment portion 3231 and the plug-in portion 312, so that the plug-in portion 312 is not easily removed from the slot 320a.

In some possible implementations, referring to FIG. 2 and FIG. 3, the post assembly 200 may include a post 210, an outer insulating sheet 220, and an inner insulating sheet 230. The post 210 may include an electrode plate and a riveting pillar connected to each other. The electrode plate and the outer insulating sheet 220 are located outside the shell 400. The outer insulating sheet 220, the shell 400, the inner insulating sheet 230 and the second connecting sheet 320 may be correspondingly provided with connecting through holes. The riveting pillar of the post 210 can pass through the connecting through hole of the outer insulating sheet 220, the connecting through hole of the shell 400, the connecting through hole of the inner insulating sheet 230 and the connecting through hole in the second connecting sheet 320 from the outside of the shell body 410 in sequence to connect the electrode plate and the second connecting sheet 320.

In some examples, the battery 10 may include two connecting sheet assemblies 300 and two tabs 110. One of the two connecting sheet assemblies 300 can be used to connect the post assembly 200 and one of the two tabs 110. The other connecting sheet assembly 300 can be used to connect the other tab 110 and the shell 400. The two tabs 110 may have opposite polarities.

In some examples, the battery 10 may further include a reinforcing sheet 500 and a sealing sheet 600. The sealing sheet 600 can be used to block off a liquid-injection hole. The sealing sheet 600 and the shell 400 may be connected by welding. The reinforcing sheet 500 can reduce a possibility of deformation of the shell 400 during the welding process. The reinforcing sheet 500 and the sealing sheet 600 may be located outside the shell 400.

In the description of the embodiments of this application, it should be noted that, unless otherwise clearly stipulated and limited, the terms "installed", "connected" and "connection" should be understood in a broad sense. For example, it can be a fixed connection, or an indirect connection through an intermediate medium, or an internal communication between two elements or an interaction relationship between two elements. For those skilled in the art, the specific meanings of the above terms in the embodiments of this application can be understood according to specific circumstances.

The devices or elements indicated or implied in the embodiments of this application must have a specific orientation, be constructed and operated in a specific orientation, which therefore should not be understood as a limitation to the embodiments of this application. In the description of the embodiments of this application, "a plurality of" means two or more than two, unless otherwise precisely and specifically specified.

The terms "first", "second", "third", "fourth", etc. (if any) in the description, claims, and the above drawings of the embodiments of this application are used to distinguish similar objects and are not intended to describe a specific order or sequence. It should be understood that such terms are interchangeable under appropriate circumstances such that the embodiments of the application described herein can, for example, be implemented in sequences other than those illustrated or described herein.

In addition, the terms "include", "having" and any variations thereof, are intended to cover non-exclusive inclusions. For example, a process, method, system, product, or device that includes a series of steps or elements is not necessarily limited to those steps or elements explicitly listed, but may include other steps or elements not explicitly listed or inherent to such process, method, product, or device.

The term "and/or" herein is merely a description of the association relationship of associated objects, indicating that three relationships may exist. For example, A and/or B can mean: A exists alone, A and B exist at the same time, and B exists alone. In addition, the character "/" herein generally indicates that the preceding object and the following object related are in an "or" relationship. In a formula, the character "/" indicates that the preceding object and the following object related are in a "divisible" relationship.

It should be understood that the various numerical signs involved in the embodiments of this application are distinguished only for the convenience of description and are not used to limit the scope of the embodiments of this application.

It can be understood that in the embodiments of this application, the serial numbers in the above processes do not mean an execution order. The execution order of each process should be determined by function and internal logic thereof, and should not limit the implementation process of the embodiments of this application.

## Claims

1. A battery (10), comprising:
a cell (100) comprising a tab (110);
a post assembly (200) connected to the tab (110);
a connecting sheet assembly (300) connecting the tab (110) and the post assembly (200), wherein the connecting sheet assembly (300) comprises a first connecting sheet (310) and a second connecting sheet (320); one of the first connecting sheet (310) and the second connecting sheet (320) is connected to the tab (110), and the other of the first connecting sheet (310) and the second connecting sheet (320) is connected to the post assembly (200); the first connecting sheet (310) is snapped with the second connecting sheet (320);
wherein the first connecting sheet (310) comprises a connecting portion (311) and a plug-in portion (312); the connecting portion (311) is connected to the tab (110), and the plug-in portion (312) is plugged into the second connecting sheet (320);
wherein the second connecting sheet (320) comprises a first plate body (321) and a second plate body (322); the first plate body (321) is connected to the post assembly (200), the first plate body (321) and the second plate body (322) are connected to form a slot (320a) with an opening (320b), and the plug-in portion (312) is plugged into the slot (320a) through the opening (320b);
**characterized in that** the first connecting sheet (310) is disposed on a side of the tab (110) facing away from the cell (100); the plug-in portion (312) extends beyond an outer side of the tab (110) along a width direction of the cell (100) and is disposed corresponding to the second plate body (322).

2. The battery (10) according to claim 1, wherein the second connecting sheet (320) comprises an elastic sheet (323); the elastic sheet (323) is disposed in the second plate body (322), protrudes from a surface of the second plate body (322) facing the first plate body (321), and abuts against the plug-in portion (312).

3. The battery (10) according to claim 2, wherein the first connecting sheet (310) and the second connecting sheet (320) are located between the tab (110) and the post assembly (200), the second plate body (322) is located on a side of the first plate body (321) facing the cell (100), and a side of the first plate body (321) facing away from the cell (100) is connected to the post assembly (200), along a length direction of the cell (100).

4. The battery (10) according to claim 2, wherein the opening (320b) of the slot (320a) is disposed along a thickness direction of the cell (100), and the plug-in portion (312) is plugged into the slot (320a) along the thickness direction; and the elastic sheet (323) comprises a fixed end (323a), an abutment portion (3231) and a movable end (323b) along the thickness direction, the fixed end (323a) is connected to the second plate body (322), the movable end (323b) is slidably connected to the second plate body (322), and the abutment portion (3231) abuts against the plug-in portion (312).

5. The battery (10) according to claim 4, wherein the abutment portion (3231) is slidable along the thickness direction, and the abutment portion (3231) approaches a direction in which the second plate body (322) is located; the abutment portion (3231) abuts against the plug-in portion (312) on a surface of the first plate body (321) facing the second plate body (322).

6. The battery (10) according to claim 4, wherein the first connecting sheet (310) is a strip-shaped plate; a plurality of elastic sheets (323) are present, and the plurality of elastic sheets (323) are disposed along a length direction of the first connecting sheet (310).

7. The battery (10) according to claim 6, wherein the first connecting sheet (310) comprises at least one snap-fit protrusion, the snap-fit protrusion is disposed on a surface of the plug-in portion (312) facing the cell (100); the second connecting sheet (320) comprises a snap-fit hole (320c), the snap-fit hole (320c) is disposed in the second plate body (322); the snap-fit hole (320c) is disposed corresponding to the snap-fit protrusion, and the snap-fit hole (320c) is disposed between two adjacent elastic sheets (323);
wherein the second plate body (322) is provided with an avoidance hole (322a), the elastic sheet (323) is provided corresponding to the avoidance hole (322a), and the snap-fit hole (320c) is provided between two adjacent avoidance holes (322a);
wherein a plurality of snap-fit holes (320c) are present, and the avoidance hole (322a) and the snap-fit hole (320c) are disposed alternatively.

8. The battery (10) according to claim 7, wherein along the length direction of the first connecting sheet (310), the plurality of elastic sheets (323) are correspondingly disposed in one of the plurality of avoidance holes (322a) close to an edge area of the second plate body (322); and along the thickness direction of the cell (100), the movable end (323b) of part of the elastic sheets (323) is close to the opening (320b) and the movable end (323b) of remaining part of the elastic sheets (323) is far away from the opening (320b);
wherein along the thickness direction, a height difference is present between the abutment portion (3231) of the elastic sheet (323) with an movable end (323b) close to the opening (320b) and the abutment portion (3231) of the elastic sheet (323) with an movable end (323b) far from the opening (320b).

9. The battery (10) according to any one of claims 4-8, wherein the elastic sheet (323) further comprises a first elastic sheet (3232) and a second elastic sheet (3233); along the thickness direction, one end of the abutment portion (3231) is connected to the first elastic sheet (3232) and the other end of the abutment portion (3231) is connected to the second elastic sheet (3233);
wherein the second connecting sheet (320) further comprises a sliding guide portion (324); the sliding guide portion (324) is connected to the second plate body (322); one of the first elastic sheet (3232) and the second elastic sheet (3233) forms the movable end (323b) at one end away from the abutment portion (3231), and the other of the first elastic sheet (3232) and the second elastic sheet (3233) forms the fixed end (323a) at one end away from the abutment portion (3231); the movable end (323b) is slidably connected to the sliding guide portion (324);
wherein an end of the first elastic sheet (3232) away from the abutment portion (3231) forms the fixed end (323a), an end of the second elastic sheet (3233) away from the abutment portion (3231) forms the movable end (323b), and the movable end (323b) is slidably connected to the sliding guide portion (324).

10. The battery (10) according to any one of claims 4-8, wherein the first plate body (321) further includes a riveting portion (3211), the riveting portion (3211) is connected to the post assembly (200), and along the length direction of the cell (100), an orthographic projection of the connecting portion (311) on a side surface of the second connecting sheet (320) facing the first connecting sheet (310) is misaligned with the riveting portion (3211).

11. The battery (10) according to any one of claims 4-8, wherein the abutment portion (3231) of the elastic sheet (323) has a largest distance protruding from the second plate body (322).

12. The battery (10) according to any one of claims 4-8, wherein when the elastic sheet (323) is in a free state, a distance between the abutment portion (3231) and the first plate body (321) is less than or equal to half of a thickness of the first connecting sheet (310).

## Patentansprüche

1. Batterie (10), umfassend:
eine Zelle (100), umfassend eine Anschlussfahne (110);
eine Polanschluss-Baugruppe (200), die mit der Anschlussfahne (110) verbunden ist;
eine Verbindungsplatten-Baugruppe (300), die die Anschlussfahne (110) und die Polanschluss-Baugruppe (200) verbindet, wobei die Verbindungsplatten-Baugruppe (300) eine erste Verbindungsplatte (310) und eine zweite Verbindungsplatte (320) umfasst; eine der ersten Verbindungsplatte (310) und der zweiten Verbindungsplatte (320) mit der Anschlussfahne (110) verbunden ist und die andere der ersten Verbindungsplatte (310) und der zweiten Verbindungsplatte (320) mit der Polanschluss-Baugruppe (200) verbunden ist; die erste Verbindungsplatte (310) in die zweite Verbindungsplatte (320) eingerastet ist;
wobei die erste Verbindungsplatte (310) einen Verbindungsabschnitt (311) und einen Steckabschnitt (312) umfasst; der Verbindungsabschnitt (311) mit der Anschlussfahne (110) verbunden ist und der Steckabschnitt (312) in die zweite Verbindungsplatte (320) eingesteckt ist;
wobei die zweite Verbindungsplatte (320) einen ersten Plattenkörper (321) und einen zweiten Plattenkörper (322) umfasst; der erste Plattenkörper (321) mit der Polanschluss-Baugruppe (200) verbunden ist, der erste Plattenkörper (321) und der zweite Plattenkörper (322) verbunden sind, um einen Schlitz (320a) mit einer Öffnung (320b) zu bilden, und der Steckabschnitt (312) durch die Öffnung (320b) in den Schlitz (320a) eingesteckt ist;
**dadurch gekennzeichnet, dass** die erste Verbindungsplatte (310) auf einer Seite der Anschlussfahne (110) angeordnet ist, die von der Zelle (100) abgewandt ist; der Steckabschnitt (312) sich entlang einer Breitenrichtung der Zelle (100) über eine Außenseite der Anschlussfahne (110) hinaus erstreckt und entsprechend dem zweiten Plattenkörper (322) angeordnet ist.

2. Batterie (10) nach Anspruch 1, wobei die zweite Verbindungsplatte (320) eine elastische Platte (323) umfasst; die elastische Platte (323) in dem zweiten Plattenkörper (322) angeordnet ist, aus einer Fläche des zweiten Plattenkörpers (322), die dem ersten Plattenkörper (321) zugewandt ist, herausragt und an dem Steckabschnitt (312) anliegt.

3. Batterie (10) nach Anspruch 2, wobei die erste Verbindungsplatte (310) und die zweite Verbindungsplatte (320) zwischen der Anschlussfahne (110) und der Polanschluss-Baugruppe (200) angeordnet sind, der zweite Plattenkörper (322) an einer Seite des ersten Plattenkörpers (321) angeordnet ist, die der Zelle (100) zugewandt ist, und eine Seite des ersten Plattenkörpers (321), die von der Zelle (100) abgewandt ist, mit der Polanschluss-Baugruppe (200) entlang einer Längsrichtung der Zelle (100) verbunden ist.

4. Batterie (10) nach Anspruch 2, wobei die Öffnung (320b) des Schlitzes (320a) entlang einer Dickenrichtung der Zelle (100) angeordnet ist und der Steckabschnitt (312) in den Schlitz (320a) entlang der Dickenrichtung eingesteckt ist; und die elastische Platte (323) ein festes Ende (323a), einen Auflagerabschnitt (3231) und ein bewegliches Ende (323b) entlang der Dickenrichtung umfasst, das feste Ende (323a) mit dem zweiten Plattenkörper (322) verbunden ist, das bewegliche Ende (323b) verschiebbar mit dem zweiten Plattenkörper (322) verbunden ist und der Auflagerabschnitt (3231) an dem Steckabschnitt (312) anliegt.

5. Batterie (10) nach Anspruch 4, wobei der Auflagerabschnitt (3231) entlang der Dickenrichtung verschiebbar ist und sich der Auflagerabschnitt (3231) einer Richtung annähert, in der sich der zweite Plattenkörper (322) befindet; der Auflagerabschnitt (3231) an dem Steckabschnitt (312) an einer Fläche des ersten Plattenkörpers (321) anliegt, die dem zweiten Plattenkörper (322) zugewandt ist.

6. Batterie (10) nach Anspruch 4, wobei die erste Verbindungslatte (310) eine streifenförmige Platte ist; eine Vielzahl von elastischen Platten (323) vorhanden ist und die Vielzahl von elastischen Platten (323) entlang einer Längsrichtung der ersten Verbindungsplatte (310) angeordnet ist.

7. Batterie (10) nach Anspruch 6, wobei die erste Verbindungsplatte (310) mindestens einen Schnappvorsprung umfasst, der Schnappvorsprung auf einer Oberfläche des Steckabschnitts (312) angeordnet ist, der der Zelle (100) zugewandt ist; die zweite Verbindungsplatte (320) ein Schnapploch (320c) umfasst, das Schnapploch (320c) in dem zweiten Plattenkörper (322) angeordnet ist; das Schnapploch (320c) entsprechend dem Schnappvorsprung angeordnet ist und das Schnapploch (320c) zwischen zwei benachbarten elastischen Platten (323) angeordnet ist;
wobei der zweite Plattenkörper (322) mit einem Ausweichloch (322a) versehen ist, die elastische Platte (323) entsprechend dem Ausweichloch (322a) bereitgestellt ist und das Schnapploch (320c) zwischen zwei benachbarten Ausweichlöchern (322a) bereitgestellt ist;
wobei eine Vielzahl von Schnapplöchern (320c) vorhanden ist und das Ausweichloch (322a) und das Schnapploch (320c) wechselseitig angeordnet sind.

8. Batterie (10) nach Anspruch 7, wobei entlang der Längsrichtung der ersten Verbindungsplatte (310) die Vielzahl von elastischen Platten (323) entsprechend in einem der Vielzahl von Ausweichlöchern (322a) in der Nähe eines Randbereichs des zweiten Plattenkörpers (322) angeordnet ist; und entlang der Dickenrichtung der Zelle (100) das bewegliche Ende (323b) eines Teils der elastischen Platten (323) in der Nähe der Öffnung (320b) ist und das bewegliche Ende (323b) des verbleibenden Teils der elastischen Platten (323) weit von der Öffnung (320b) entfernt ist;
wobei entlang der Dickenrichtung ein Höhenunterschied zwischen dem Auflagerabschnitt (3231) der elastischen Platte (323) mit einem beweglichen Ende (323b) in der Nähe der Öffnung (320b) und dem Auflagerabschnitt (3231) der elastischen Platte (323) mit einem beweglichen Ende (323b) weit von der Öffnung (320b) entfernt vorhanden ist.

9. Batterie (10) nach einem der Ansprüche 4 bis 8, wobei die elastische Platte (323) ferner eine erste elastische Platte (3232) und eine zweite elastische Platte (3233) umfasst; entlang der Dickenrichtung ein Ende des Auflagerabschnitts (3231) mit der ersten elastischen Platte (3232) verbunden ist und das andere Ende des Auflagerabschnitts (3231) mit der zweiten elastischen Platte (3233) verbunden ist;
wobei die zweite Verbindungsplatte (320) ferner einen Gleitführungsabschnitt (324) umfasst; der Gleitführungsabschnitt (324) mit dem zweiten Plattenkörper (322) verbunden ist; eine von der ersten elastischen Platte (3232) und der zweiten elastischen Platte (3233) das bewegliche Ende (323b) an einem Ende weg von dem Auflagerabschnitt (3231) bildet und die andere von der ersten elastischen Platte (3232) und der zweiten elastischen Platte (3233) das feste Ende (323a) an einem Ende entfernt von dem Auflagerabschnitt (3231) bildet; das bewegliche Ende (323b) verschiebbar mit dem Gleitführungsabschnitt (324) verbunden ist;
wobei ein Ende der ersten elastischen Platte (3232) entfernt von dem Auflagerabschnitt (3231) das feste Ende (323a) bildet, ein Ende der zweiten elastischen Platte (3233) entfernt von dem Auflagerabschnitt (3231) das bewegliche Ende (323b) bildet und das bewegliche Ende (323b) verschiebbar mit dem Gleitführungsabschnitt (324) verbunden ist.

10. Batterie (10) nach einem der Ansprüche 4 bis 8, wobei der erste Plattenkörper (321) ferner einen Nietabschnitt (3211) einschließt, der Nietabschnitt (3211) mit der Polanschluss-Baugruppe (200) verbunden ist und entlang der Längsrichtung der Zelle (100) eine rechtwinklige Projektion des Verbindungsabschnitts (311) auf eine Seitenfläche der zweiten Verbindungsplatte (320), die der ersten Verbindungsplatte (310) zugewandt ist, mit dem Nietabschnitt (3211) falsch ausgerichtet ist.

11. Batterie (10) nach einem der Ansprüche 4 bis 8, wobei der Auflagerabschnitt (3231) der elastischen Platte (323) einen größten Abstand aufweist, der aus dem zweiten Plattenkörper (322) herausragt.

12. Batterie (10) nach einem der Ansprüche 4 bis 8, wobei, wenn sich die elastische Platte (323) in einem freien Zustand befindet, ein Abstand zwischen dem Auflagerabschnitt (3231) und dem ersten Plattenkörper (321) kleiner oder gleich der Hälfte einer Dicke der ersten Verbindungsplatte (310) ist.

## Revendications

1. Une batterie (10) comprenant :
une cellule (100) comprenant une languette (110) ;
un ensemble de montant (200) connecté à la languette (110) ;
un ensemble de feuille de connexion (300) connectant la languette (110) et l'ensemble de montant (200), l'ensemble de feuille de connexion (300) comprenant une première feuille de connexion (310) et une deuxième feuille de connexion (320) ; l'une de la première feuille de connexion (310) et de la deuxième feuille de connexion (320) étant connectée à la languette (110), et l'autre de la première feuille de connexion (310) et de la deuxième feuille de connexion (320) étant connectée à l'ensemble de montant (200) ; la première feuille de connexion (310) étant encliquetée avec la deuxième feuille de connexion (320) ;
la première feuille de connexion (310) comprenant une partie de connexion (311) et une partie enfichable (312) ; la partie de connexion (311) étant connectée à la languette (110), et la partie enfichable (312) étant enfichée dans la deuxième feuille de connexion (320) ;
la deuxième feuille de connexion (320) comprenant un premier corps de plaque (321) et un deuxième corps de plaque (322) ; le premier corps de plaque (321) étant connecté à l'ensemble de montant (200), le premier corps de plaque (321) et le deuxième corps de plaque (322) étant connectés pour former une fente (320a) avec une ouverture (320b), et la partie enfichable (312) étant enfichée dans la fente (320a) à travers l'ouverture (320b) ;
**caractérisée en ce que** la première feuille de connexion (310) est disposée sur un côté de la languette (110) opposé à la cellule (100) ; la partie enfichable (312) s'étend au-delà d'un côté extérieur de la languette (110) le long d'une direction de largeur de la cellule (100) et est disposée en correspondance avec le deuxième corps de plaque (322).

2. La batterie (10) selon la revendication 1, dans laquelle la deuxième feuille de connexion (320) comprend une feuille élastique (323) ; la feuille élastique (323) est disposée dans le deuxième corps de plaque (322), dépasse d'une surface du deuxième corps de plaque (322) faisant face au premier corps de plaque (321), et vient en butée contre la partie enfichable (312).

3. La batterie (10) selon la revendication 2, dans laquelle la première feuille de connexion (310) et la deuxième feuille de connexion (320) sont situées entre la languette (110) et l'ensemble de montant (200), le deuxième corps de plaque (322) est situé sur un côté du premier corps de plaque (321) faisant face à la cellule (100), et un côté du premier corps de plaque (321) orienté à l'opposé de la cellule (100) est connecté à l'ensemble de montant (200), le long d'une direction longitudinale de la cellule (100).

4. La batterie (10) selon la revendication 2, dans laquelle l'ouverture (320b) de la fente (320a) est disposée le long d'une direction d'épaisseur de la cellule (100), et la partie enfichable (312) est enfichée dans la fente (320a) le long de la direction d'épaisseur ; et la feuille élastique (323) comprend une extrémité fixe (323a), une partie de butée (3231) et une extrémité mobile (323b) le long de la direction d'épaisseur, l'extrémité fixe (323a) est connectée au deuxième corps de plaque (322), l'extrémité mobile (323b) est connectée de manière coulissante au deuxième corps de plaque (322), et la partie de butée (3231) vient en butée contre la partie enfichable (312).

5. La batterie (10) selon la revendication 4, dans laquelle la partie de butée (3231) peut coulisser le long de la direction d'épaisseur, et la partie de butée (3231) se rapproche d'une direction dans laquelle le deuxième corps de plaque (322) est situé ; la partie de butée (3231) vient en butée contre la partie enfichable (312) sur une surface du premier corps de plaque (321) faisant face au deuxième corps de plaque (322).

6. La batterie (10) selon la revendication 4, dans laquelle la première feuille de connexion (310) est une plaque en forme de bande ; une pluralité de feuilles élastiques (323) sont présentes, et la pluralité de feuilles élastiques (323) sont disposées le long d'une direction longitudinale de la première feuille de connexion (310).

7. La batterie (10) selon la revendication 6, dans laquelle la première feuille de connexion (310) comprend au moins une saillie d'encliquetage, la saillie d'encliquetage est disposée sur une surface de la partie enfichable (312) faisant face à la cellule (100) ; la deuxième feuille de connexion (320) comprend un trou d'encliquetage (320c), le trou d'encliquetage (320c) est disposé dans le deuxième corps de plaque (322) ; le trou d'encliquetage (320c) est disposé en correspondance avec la saillie d'encliquetage, et le trou d'encliquetage (320c) est disposé entre deux feuilles élastiques adjacentes (323) ;
dans laquelle le deuxième corps de plaque (322) est pourvu d'un trou d'évitement (322a), la feuille élastique (323) est agencée en correspondance avec le trou d'évitement (322a), et le trou d'encliquetage (320c) est agencé entre deux trous d'évitement adjacents (322a) ;
dans laquelle une pluralité de trous d'encliquetage (320c) sont présents, et le trou d'évitement (322a) et le trou d'encliquetage (320c) sont disposés en alternance.

8. La batterie (10) selon la revendication 7, dans laquelle le long de la direction longitudinale de la première feuille de connexion (310), la pluralité de feuilles élastiques (323) sont disposées en correspondance avec un trou de la pluralité de trous d'évitement (322a) à proximité d'une zone de bord du deuxième corps de plaque (322) ; et le long de la direction d'épaisseur de la cellule (100), l'extrémité mobile (323b) d'une partie des feuilles élastiques (323) est à proximité de l'ouverture (320b) et l'extrémité mobile (323b) d'une partie restante des feuilles élastiques (323) est éloignée de l'ouverture (320b) ;
dans laquelle le long de la direction d'épaisseur, une différence de hauteur est présente entre la partie de butée (3231) de la feuille élastique (323) avec une extrémité mobile (323b) proche de l'ouverture (320b) et la partie de butée (3231) de la feuille élastique (323) avec une extrémité mobile (323b) éloignée de l'ouverture (320b).

9. La batterie (10) selon l'une quelconque des revendications 4 à 8, dans laquelle la feuille élastique (323) comprend en outre une première feuille élastique (3232) et une deuxième feuille élastique (3233) ; le long de la direction d'épaisseur, une extrémité de la partie de butée (3231) est connectée à la première feuille élastique (3232) et l'autre extrémité de la partie de butée (3231) est connectée à la deuxième feuille élastique (3233) ;
dans laquelle la deuxième feuille de connexion (320) comprend en outre une partie de guidage coulissante (324) ; la partie de guidage coulissante (324) est connectée au deuxième corps de plaque (322) ; l'une de la première feuille élastique (3232) et de la deuxième feuille élastique (3233) forme l'extrémité mobile (323b) à une extrémité éloignée de la partie de butée (3231), et l'autre de la première feuille élastique (3232) et de la deuxième feuille élastique (3233) forme l'extrémité fixe (323a) à une extrémité éloignée de la partie de butée (3231) ; l'extrémité mobile (323b) est connectée de manière coulissante à la partie de guidage coulissante (324) ;
dans laquelle une extrémité de la première feuille élastique (3232) éloignée de la partie de butée (3231) forme l'extrémité fixe (323a), une extrémité de la deuxième feuille élastique (3233) éloignée de la partie de butée (3231) forme l'extrémité mobile (323b), et l'extrémité mobile (323b) est connectée de manière coulissante à la partie de guidage coulissante (324).

10. La batterie (10) selon l'une quelconque des revendications 4 à 8, dans laquelle le premier corps de plaque (321) comprend en outre une partie de rivetage (3211), la partie de rivetage (3211) est connectée à l'ensemble de montant (200), et le long de la direction longitudinale de la cellule (100), une projection orthographique de la partie de connexion (311) sur une surface latérale de la deuxième feuille de connexion (320) faisant face à la première feuille de connexion (310) est désalignée par rapport à la partie de rivetage (3211).

11. La batterie (10) selon l'une quelconque des revendications 4 à 8, dans laquelle la partie de butée (3231) de la feuille élastique (323) a une distance la plus grande dépassant du deuxième corps de plaque (322).

12. La batterie (10) selon l'une quelconque des revendications 4 à 8, dans laquelle, lorsque la feuille élastique (323) est dans un état libre, une distance entre la partie de butée (3231) et le premier corps de plaque (321) est inférieure ou égale à la moitié d'une épaisseur de la première feuille de connexion (310).
